# EUROPEAN PATENT APPLICATION

(11) **EP 2 876 013 A1**
(43) Date of publication of application: **27.05.2015**
(21) Application number: 13464018.4
(22) Date of filing: 25.11.2013
(51) Int. Cl.: B60W 10/02, B60W 10/04, B60W 30/095, B60W 30/18, B60W 40/04

(54) **Method for operating an engine control unit of a vehicle and corresponding apparatus**

(71) Applicant: Continental Automotive GmbH, 30165 Hannover (DE)
(72) Inventor: Szilagyi, Jozsef Sebastian Albert, 417075 Bors (RO)

(57) **Abstract**

A method for operating an engine control unit is specified. According to one aspect of the method for operating an engine control unit of the vehicle, the method comprises the following steps:
- collecting traffic data,
- collecting location data
- collecting status data from the engine control unit,
- calculating a control signal, wherein the control signal depends on the traffic data, the location data and the status data, and
- transmitting the control signal to the engine control unit.

Further, an apparatus for carrying out the method is specified.

## Description

A method for operating an engine control unit is specified. Further, an apparatus for carrying out the method is specified.

One object to be achieved is to specify a method and an apparatus for carrying out the method which allows operating the engine control unit of a vehicle such that the vehicle has a reduced energy consumption.

A method for operating an engine control unit of a vehicle is specified. The vehicle is a power-driven vehicle which comprises an engine. The engine comprises an internal combustion engine and/or one or several electric motor(s). In particular it is possible that the engine of the vehicle is a hybrid engine and comprises an internal combustion engine and at least one electric motor.

The engine control unit, also known as power train control module or power train engine control unit, is a control unit which allows the open-loop control, the closed-loop control and/or the monitoring of the mode of operation of the engine.

According to one aspect of the method, the method comprises a method step wherein traffic data is collected. For example, the traffic data can be collected by an apparatus which functions as a collector of traffic data, said traffic data being, for example, provided by an intelligent transport system (ITS). The traffic data may comprise real-time data, for example data about the current traffic flow. For example, the traffic data comprises information about traffic jams. Further, the traffic information can comprise stored information like information about traffic lights or the like.

According to one aspect of the method, the method comprises a method step wherein location data is collected. For example, the location data is collected by an apparatus for collecting location data, such as a collector of satellite navigation data. For example, such a collector of location data could be a receiver for signals of a satellite-based positioning system like the Global Positioning System (GPS). The location data then comprises information about the location of the vehicle.

According to one aspect of the invention, the method comprises a method step wherein status data from the engine control unit is collected. The status data, for example, comprises real-time data about the current status of the engine, such as the current energy consumption of the engine. Further, the status data can comprise stored values about the engine such as average energy consumption data.

According to one aspect of the method, the method comprises a method step wherein a control signal is calculated, said control signal depending on the traffic data, the location data and the status data. As a consequence, the control signal is a function of at least one item of said data set; for example, the control signal can be a function of all three items, i.e. the traffic data, the location data and the status data.

According to one aspect of the method, the method comprises a method step wherein the control signal is transmitted to the engine control unit. In the engine control unit, the control signal is processed such that a mode of operation of the engine is controlled as a function of the control signal. For example, the status of the engine is changed due to the control signal which is transmitted to the engine control unit. Thereby, depending on the control signal, the engine control unit can effect one or more changes of the status of the engine.

According to one aspect of the method for operating an engine control unit of the vehicle, the method comprises the following steps:
- collecting traffic data,
- collecting location data,
- collecting status data from the engine control unit,
- calculating a control signal, wherein the control signal depends on the traffic data, the location data and the status data, and
- transmitting the control signal to the engine control unit.

Here, it is not necessary for the listed method steps to be processed in the given order; rather, the collection of different data can for instance be conducted in a different order or simultaneously. The calculation of the control signal is performed after the necessary data has been collected.

According to one aspect of the method, the traffic data comprises at least one of the following information:
- location of a limitation of traffic flow,
- status of a limitation of traffic flow, and
- timing of a limitation of traffic flow. Further for example the distance to the limitation of traffic flow could be considered.

For example, a traffic light or a gate, such as the gate at a level crossing, is a limitation of traffic flow. Thus, the location of the limitation of traffic flow is the location of, for example, the traffic light or the gate. The status of the limitation of traffic flow is the status of the traffic light (red, green, yellow) or the gate (open or closed), and the timing of the limitation of traffic flow is, for example, the time that passes until the light of the traffic light changes or until the status of the gate changes.

Analogously, the limitation of traffic flow can also be a traffic jam, wherein the location of the traffic jam can be the end of the traffic jam, the status of the traffic jam can be the length of the traffic jam and the timing of the traffic jam can be the average velocity of vehicles in the traffic jam.

According to one aspect of the method, for calculating the control signal, the location of the vehicle is compared with the location of the limitation of traffic flow such that the control signal depends on the locations of the vehicle and the limitation of traffic flow. In other words, the control signal can depend on the distance between the vehicle and the limitation of traffic flow, for example the distance between a traffic light and the vehicle.

According to one aspect of the method, the status of the limitation of traffic flow is considered such that the control signal depends on the status of the limitation of traffic flow. For example, the control signal depends on whether a traffic light is in its red or its green state.

According to one aspect of the method for calculating the control signal, the timing of the limitation of traffic flow is considered such that the control signal depends on the timing of the limitation of traffic flow. For example, the control signal depends on the length of the time period for which a traffic light will remain in its green state.

According to one aspect of the method, the control signal depends on the locations of the vehicle and of the limitation of traffic flow, the status of the limitation of traffic flow and the timing of the limitation of traffic flow. For example, the distance between a vehicle and a traffic light, the status of the traffic light and the length of the time period for which the traffic light remains in this status are taken into account when calculating the control signal. For example, from this information, it is calculated whether the vehicle will reach the traffic light while the traffic light is in its red or in its green status, and a control signal will be calculated accordingly. In other words for example a probability for the vehicle to reach the limitation of traffic flow in a certain state (e.g. a traffic light in its green state) can be computed from the given information.

According to one aspect of the method, the status data comprises at least one of the following information: current energy consumption of the engine, expected energy consumption for changing the status of the engine. For example, if the engine comprises an internal combustion engine, the current energy consumption can be given by the current fuel consumption. The energy consumption for changing the status of the engine can then, for example, be the amount of fuel which is necessary for stopping and starting the internal combustion engine. Thereby the energy consumption for changing the status of the engine can be given by means of average values which are stored in the engine control unit and which may be calculated during the operation of the engine. Consequently, the energy consumption can be an estimated value, for example, the average energy consumption of previous ignition processes. The energy consumption of the engine can then be considered for the calculation of the control signal such that the control signal is a function, for example, of the current energy consumption of the engine and/or the expected energy consumption for changing the status of the engine.

According to one aspect of the method, the control signal triggers a change of the status of the engine if a break-even condition for the changing of the status of the engine is fulfilled. The break-even condition is a concept in which the resources consumed during the power state transition, i.e. the changing of the status of the engine, are equal or smaller than the energy consumption without a change of the status of the engine. In particular, the break-even condition is fulfilled if an estimated energy consumption resulting from the change of the status of the engine is smaller or equal than an estimated energy consumption without the change of the status of the engine.

For example, if the engine comprises an internal combustion engine, the break-even condition is fulfilled if the fuel consumption for running the internal combustion engine equals the fuel consumption for stopping the internal combustion engine plus the energy which is consumed during the time it takes for the engine to be stopped plus the fuel which is consumed for starting the internal combustion engine. Whether or not the break-even condition is fulfilled then depends, for example, on the length of the time period for which a traffic light stays red, as for this time the engine could be stopped.

Therefore, the process of changing the status of the engine can comprise at least one of the following actions: decoupling an internal combustion engine, decoupling an electric motor, coupling an internal combustion engine, coupling an electric motor, stopping an internal combustion engine, stopping an electric motor, starting an internal combustion engine, starting an electric motor.

The status of the engine is changed only if the estimated energy consumption resulting from the change of the status of the engine is smaller or equal to the energy consumption without the change of the status. The energy consumption of the vehicle with and without the change of the status is considered for calculating the control signal along with the location data and the traffic data.

Accordingly, for the described method, internal and external data is used for the calculation of the control signal. This allows for a particularly accurate estimate of the energy consumption during different states of the engine.

The described method helps to create vehicles which are more environmentally friendly, as the consumption of energy, for example the fuel consumption, and thus the emissions of exhaust fumes and greenhouse gas, can be reduced.

Further, an apparatus for operating an engine control unit is specified. The apparatus comprises a processor which is, for example, configured to calculate the control signal from the above-specified data. Thus, the apparatus is configured to carry out a herein-described method for operating an engine control unit. Consequently, all features described for the method are disclosed for the apparatus and vice versa.

According to one aspect of the apparatus, the processor is part of a further component of the vehicle. For example, the processor is part of an in-car entertainment system of the vehicle. Such an in-car entertainment system can be a collection of hardware devices installed into the vehicle to provide audio and/or audio-visual entertainment as well as, for example, an automotive navigation system. A processor already present in the in-car entertainment system is used for the calculation of the control signal. Thus, the herein described method and the herein described apparatus do not require an additional, maybe expensive, component, but instead, a component already included in the vehicle can be used. This allows for a particularly cost-efficient implementation of the method and the apparatus. However it is also possible to use another engine control unit with enough processing power that can perform the functions and has access to the relevant data.

For example, the apparatus can comprise further components which can be already present in the vehicle. For example, the apparatus comprises a collector of location data, for example a GPS receiver, and/or a collector of traffic data, for example an intelligent transport system data collector.

Advantageous embodiments and developments of the herein described method and the herein described apparatus will become apparent from the exemplary embodiments described below in association with the figures.

In the figures:
Figure 1 shows a schematic illustration of an embodiment of a herein described apparatus which is configured to carry out a herein described method.
Figure 2 shows a schematic flowchart for describing an embodiment of a herein described method.

In the exemplary embodiments and figures, similar or similarly acting constituent parts are given the same reference symbols. The elements illustrated in the figures and their size relation among one another should not be regarded as true to scale. Rather, individual elements may be represented at an exaggerated size for the sake of better representation and/or for the sake of better understanding.

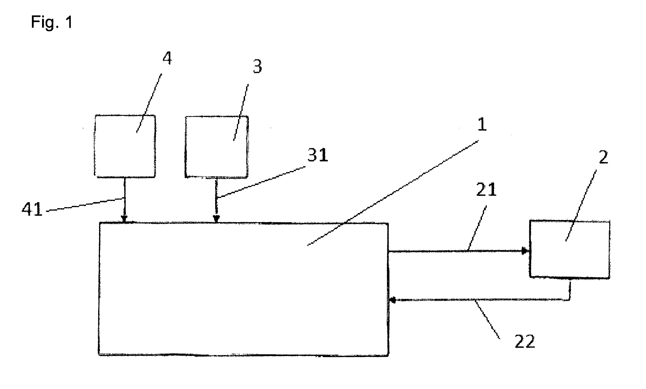

In connection with Figure 1 an exemplary embodiment of a herein described apparatus is explained in detail.

The apparatus comprises a processor 1. The processor 1 is, for example, part of an on-board entertainment system of the vehicle. Consequently, no additional component has to be integrated in the vehicle in order to provide processor 1, but processor 1 is already present in the vehicle.

The apparatus further comprises a collector of traffic data 3. The collector of traffic data 3 is, for example, configured to collect intelligent transport system data. This data is submitted as traffic data 31 to the processor 1 of the apparatus. In order to do so, the processor 1 and the collector of traffic data 3 can be connected with each other. For example, the data can be submitted via wireless communication or through a direct electrical connection between the processor 1 and the collector of traffic data 3.

The apparatus further comprises a collector of location data 4. The collection of location data 4 is, for example, given by a GPS receiver. The processor 1 and the collector of location data 4 are connected with each other.

The collector of location data submits location data 41 to the processor 1. For example, the data can be submitted via wireless communication or through a direct electrical connection between the processor 1 and the collector of location data 4.

The processor 1 is further connected to an engine control unit 2. The engine control unit 2 is configured to control the engine of a vehicle. From the engine control unit 2 status data 22 is transmitted to the processor 1. For example, the status data 22 comprises information about the current energy consumption of the engine and/or the energy consumption needed for changing the status of the engine.

During the herein described method, a control signal 21 is calculated by the processor 1, wherein the control signal 21 depends on the traffic data 31, the location data 41 and the status data 22. The control signal 21 is then transmitted to the engine control unit 2, wherein the engine control unit 2 is configured to control the engine of the vehicle, which for example comprises an internal combustion engine and/or an electric motor. Thereby the control signals can effect a change of the status of the engine through the engine control unit 2.

The traffic data 31 may include, for example, pre-stored information on the status and timing of traffic flow limitations such as traffic signal systems like traffic lights. Furthermore, it is possible that the limitations of traffic flow themselves, for example traffic lights, transmit real-time information concerning the status and the timing of the limitation of the traffic flow. This means that the limitation of traffic flow communicates its state and the time remaining in this state. Thus, a traffic light, for example, periodically sends information about its status as well as its timing, for example the time for which it remains in the present state. The traffic data 31 can thereby either be actively accessed by the collector of traffic data or the traffic data 31 is broadcast at regular intervals (e.g. every second) and received by the collector of traffic data 3.

The collection of the traffic data 31 can also be triggered by the location data 41 which is detected by the collector of location data 4. For example, the location data 41 indicates when the vehicle drives into a certain region, for example into a certain city. This can trigger the collection of traffic data 31 by the collector of traffic data 3, for example the download of a map with the locations of limitation of traffic flow like traffic lights and information about their timing. Additionally or as an alternative, it is possible that the traffic data 31 is collected when the car is in a non-operating state, for example in a garage. Then the collector of traffic data 3 could download the traffic maps concentric to its current position, and the information on the status and the timing of the traffic lights, for example, is updated only when the vehicle approaches a certain region. Further it is possible that the vehicle approaches a limitation of traffic flow, for example a traffic light, and the vehicle, for example the collector of traffic data 3, sends a query to the limitation to ask for the status and the timing of the limitation. However, e.g. for traffic lights a beacon approach is preferably in order to keep the electronics of the traffic lights as simple as possible. In this way it would not be necessary for the traffic light to handle a great number of requests but the traffic lights could periodically communicate the information that is sufficient for a correct operation of the system.

The control signal 21 for the engine control unit 2 is calculated as a function of the status data 22 of the engine, the traffic data 31 and the location data 41. By way of example, the vehicle approaches a traffic light which is in its red status. By using the location data 41 and the information for the location of the traffic light, for example collected from the traffic data 31, the distance between the vehicle and the traffic light is calculated. By using the traffic data 31, the status of the traffic light, in this example the status "red", as well as the timing of the traffic light, for example the length of the time period for which the traffic light stays in the status "red", are determined. With regard to the status data 22 of the engine control unit, i.e. with regard to the current energy consumption and the expected energy consumption for changing the status of the engine, a control signal will be calculated which leads to a change of the status of the engine by using the engine control unit if the estimated energy consumption resulting from the change of the status is equal or smaller than without the change of the status.

Consequently, if the break-even condition described above is fulfilled, the control signal effects the change of the status. For example, if the engine is a hybrid engine, the internal combustion engine can be decoupled and the electric motor can be coupled. For a conventional engine which only comprises an internal combustion engine, it is possible that the engine is stopped at the red traffic light and is restarted when the traffic light turns green.

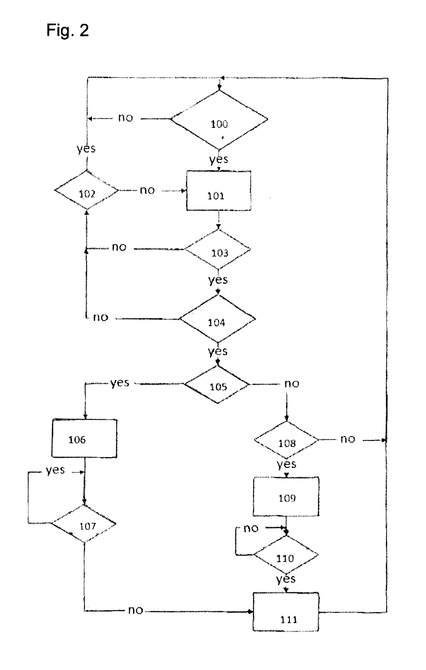

In Figure 2 a flowchart is shown to describe an embodiment of a herein described method in more detail.

For example, the method starts at decision 100. At this decision, it is checked whether the location data and/or the traffic data indicate a limitation of traffic flow. If so, function 101 will be carried out, in which traffic data regarding the limitation of traffic flow is collected. For example, information about the status and the timing of the limitation of traffic flow is collected.

At decision 103, it is checked whether traffic data regarding the status and the timing of the limitation of traffic flow has been received. If this is not the case, it is checked in decision 102 whether the limitation of traffic flow has been passed by the vehicle.

If traffic data regarding the status and the timing of the limitation of traffic flow has been received, in decision 104 it is checked whether the vehicle will be slowed down or stopped by the limitation of traffic flow.

If this is the case, in decision 105 it is checked whether the vehicle comprises a hybrid engine.

If the vehicle comprises a hybrid engine, it is tested in decision 112 if the battery charge is adequate for an exclusively electric operation of the vehicle. If so, process 106 is carried out, due to which only the electric motor is used. Here, the operating of the electric motor can depend on a break-even condition (not shown) as described above.

If in decision 112 it is decided that not enough battery charge is left, decision 108 is called.

In decision 107 it is constantly being checked whether the electric motor is adequate for operating the vehicle until the decision is "no" and the internal combustion engine is coupled in process 111.

If the engine is not a hybrid engine in decision 105, in decision 108 the break-even conditions as explained above are checked. Here, it is checked whether changing the status by decoupling and coupling or stopping and restarting the engine is energetically favourable over the normal operation of the engine. If this is the case, the engine is decoupled or stopped and an engine self-start timer is activated in process 109.

Subsequently, in decision 110 it is constantly being checked whether the self-start timer has expired. If this is the case, process 111 is started, where the engine is coupled or started and normal operation of the vehicle is resumed.

The invention is not restricted to the exemplary embodiments by the description on the basis of said exemplary embodiments. Rather, the invention encompasses any new feature and also any combination of features, which in particular comprises any combination of features in the patent claims and any combination of features in the exemplary embodiments, even if this feature or this combination itself is not explicitly specified in the patent claims or exemplary embodiments.

## Claims

1. Method for operating an engine control unit (2) of a vehicle comprising the following steps:
- collecting traffic data (31),
- collecting location data (41),
- collecting status data (22) from the engine control unit (2),
- calculating a control signal (21), wherein the control signal (21) depends on the traffic data (31), the location data (41) and the status data (22), and
- transmitting the control signal (21) to the engine control unit (2).

2. Method according to the previous claim, wherein the traffic data (31) comprises at least one of the following information: location of a limitation of traffic flow, status of a limitation of traffic flow, timing of a limitation of traffic flow.

3. Method according to the previous claim, wherein the limitation of traffic flow is a traffic light, a gate or a traffic jam.

4. Method according to one of the previous claims, wherein, for calculating the control signal (21), the location of the vehicle is compared with the location of the limitation of traffic flow such that the control signal (21) depends on the locations of the vehicle and of the limitation of traffic flow.

5. Method according to one of the previous claims, wherein, for calculating the control signal (21), the status of the limitation of traffic flow is considered such that the control signal (21) depends on the status of the limitation of traffic flow.

6. Method according to one of the previous claims, wherein, for calculating the control signal (21), the timing of the limitation of traffic flow is considered such that the control signal (21) depends on the timing of the limitation of traffic flow.

7. Method according to one of the previous claims, wherein the status data (22) comprises at least one of the following information: current energy consumption of the engine, expected energy consumption for changing the status of the engine.

8. Method according to one of the previous claims, wherein the control signal (21) triggers a change of the status of the engine if a break-even condition for changing the status of the engine is fulfilled.

9. Method according to the two previous claims, wherein the changing of the status of the engine comprises at least one of the following actions: decoupling an internal combustion engine, decoupling an electric motor, coupling an internal combustion engine, coupling an electric motor, stopping an internal combustion engine, stopping an electric motor, starting an internal combustion engine, starting an electric motor.

10. Method according to the two previous claims, wherein the break-even condition is fulfilled if an estimated energy consumption resulting from the change of the status of the engine is equal to or smaller than an estimated energy consumption without changing of the status of the engine.

11. Apparatus for operating an engine control unit (2) of a vehicle which is configured to carry out a method according to at least one of the previous claims, wherein the apparatus comprises a processor (1).

12. Apparatus according to the previous claim, wherein the processor (2) is part of an in-car entertainment system of the vehicle.
